# EUROPEAN PATENT SPECIFICATION

(11) **EP 3 895 944 B1**
(45) Date of publication and mention of the grant of the patent: **08.05.2024**
(21) Application number: 20850515.6
(22) Date of filing: 12.06.2020
(51) Int. Cl.: B60T 8/176, B60T 8/32

(54) **RAILWAY VEHICLE BRAKE PRESSURE CONTROL DEVICE, AND CONTROL METHOD THEREFOR**
BREMSDRUCKREGLER FÜR SCHIENENFAHRZEUG UND STEUERVERFAHREN DAFÜR
DISPOSITIF DE COMMANDE DE PRESSION DE FREIN DE VÉHICULE FERROVIAIRE, ET PROCÉDÉ DE COMMANDE ASSOCIÉ

(30) Priority: 02.08.2019 CN 201910710637
(43) Date of publication of application: 20.10.2021
(73) Proprietor: CRRC Nanjing Puzhen Haitai Brake Equipment Co., Ltd., Nanjing, Jiangsu 211800 (CN)
(72) Inventor: LIU, Yinhu, Nanjing, Jiangsu 211800 (CN); LU, Jinjun, Nanjing, Jiangsu 211800 (CN); CAI, Liangliang, Nanjing, Jiangsu 211800 (CN); YANG, Zhengzhuan, Nanjing, Jiangsu 211800 (CN); DU, Yunzhe, Nanjing, Jiangsu 211800 (CN); MA, Ming, Nanjing, Jiangsu 211800 (CN); XING, Shen, Nanjing, Jiangsu 211800 (CN); DING, Jian, Nanjing, Jiangsu 211800 (CN)
(74) Representative: Murgitroyd & Company
(86) International application number: PCT/CN2020/095732
(87) International publication number: WO 2021/022904

(56) References cited:
- EP-A2- 0 453 811
- CN-A- 1 931 640
- CN-A- 103 381 798
- CN-A- 108 482 416
- CN-A- 110 395 242
- JP-A- H11 170 999
- US-A1- 2007 057 569

## Description

### TECHNICAL FIELD

The present invention relates to an apparatus for controlling a brake pressure of a railway vehicle and a control method thereof.

### BACKGROUND

An existing brake system of a railway vehicle generates a pre-control pressure of a relay valve mainly by using an electro-pneumatic conversion unit. After undergoing flow amplification performed by the relay valve, the pre-control pressure forms a brake pressure. The brake pressure is output to a brake clamp through an anti-slip valve, so as to make the railway vehicle brake while achieving anti-slip control of the vehicle through control of the anti-slip valve. In such a brake pressure control mode, under both brake and anti-slip working conditions, control of the brake pressure is open-loop control, is likely to be affected by performance of valves, and cannot guarantee accuracy of the brake pressure. In addition, a structure of an apparatus is relatively complex.

US2007057569 A1 discloses a brake controller for a trail locomotive in a two pipe brake system. Said brake controller for a trail locomotive includes a train brake pipe, a locomotive brake pipe, a brake cylinder, a control valve being responsive to pressure in the train brake pipe to produce brake apply and brake release signals at an output, and a relay valve having first and second control inputs and having a source input and an exhaust input selectively connected to an output in response to the control inputs.

### SUMMARY OF THE PRESENT INVENTION

The technical problem to be resolved by the present invention is to overcome the foregoing disadvantages in the prior art and provide an apparatus for controlling a brake pressure of a railway vehicle and a control method thereof, to implement closed-loop control of a brake pressure under brake and anti-slip working conditions. The present invention has higher brake pressure accuracy and is applicable to pressure control of a bogie or a single axle without being affected by performance changes or degradation of valves.

To resolve the foregoing technical problems, the apparatus for controlling a brake pressure of a railway vehicle provided by the present invention includes: a microcomputer controller and a brake pressure regulation mechanism, where the brake pressure regulation mechanism includes a deflation valve, a holding valve, and a pressure sensor configured to feed back a brake pressure to the microcomputer controller; and a holding solenoid valve and a deflation solenoid valve that are controlled by the microcomputer controller, where a main air supply is connected to air inlets of the holding solenoid valve, the deflation solenoid valve, and the holding valve respectively, an air outlet of the holding solenoid valve is connected to first pressure ports of the deflation valve and the holding valve, an air outlet of the deflation solenoid valve is connected to second pressure ports of the deflation valve and the holding valve, a deflation port of the deflation valve is in communication with the atmosphere, and pressure output ports of the deflation valve and the holding valve are connected to a brake pipe.

The present invention further has the following features:
1. Two brake pressure regulation mechanisms and a pneumatic valve and a brake solenoid valve controlled by the microcomputer controller that are disposed between the two brake pressure regulation mechanisms are included, where brake pipes involved in the two brake pressure regulation mechanisms are in communication with each other through the pneumatic valve, an air inlet of the brake solenoid valve is connected to the main air supply, two control pressure ports of the pneumatic valve are respectively connected to a pressure output port of the brake solenoid valve and an emergency pre-control pressure; and when an output pressure of the brake solenoid valve is less than the emergency pre-control pressure, the pneumatic valve is opened to connect the brake pipes involved in the two brake pressure regulation mechanisms to each other.
2. The pneumatic valve internally includes a valve core and an upper diaphragm pressed by the output pressure of the brake solenoid valve and a lower diaphragm pressed by the emergency pre-control pressure that are respectively disposed on two ends of the valve core, where the area of the upper diaphragm is greater than the area of the lower diaphragm, and when the pressure on the lower diaphragm is greater than the pressure on the upper diaphragm, the pneumatic valve is opened.

In addition, the present invention provides a method for controlling a brake pressure of a railway vehicle, implemented by using the foregoing apparatus for controlling a brake pressure of a railway vehicle, where:
1) during inflation, the holding solenoid valve is de-energized and closed, and the deflation solenoid valve is de-energized and opened to inlet air, to generate a corresponding pre-control pressure of the pneumatic valve; in this case, pressures on lower diaphragms of the deflation valve and the holding valve are greater than pressures of upper diaphragms thereof, to form a pressure difference, the deflation valve is closed, the holding valve is opened, and the main air supply supplies air into the brake pipe to form a brake pressure, and inputs the brake pressure to a brake clamp;
2) during pressure holding, the holding solenoid valve is energized and opened to inlet air, and the deflation solenoid valve is de-energized and opened to inlet air; and in this time, the deflation valve and the holding valve are both closed, and the brake pressure in the brake pipe is kept unchanged;
3) during deflation, the holding solenoid valve is energized and opened to inlet air, and the deflation solenoid valve is energized and closed; and in this case, the pressures on the upper diaphragms of the deflation valve and the holding valve are greater than the pressures on the lower diaphragms thereof, to form a pressure difference, the holding valve is cut off to inlet air, the deflation valve is opened to exhaust air, and the brake pressure in the brake pipe is reduced; and
4) during closed-loop control of the brake pressure, the pressure sensor collects the brake pressure of the brake pipe in real time, and outputs the brake pressure to the microcomputer controller, and microcomputer controller controls the holding solenoid valve and the deflation solenoid valve to drive the deflation valve and the holding valve to act, to make a deviation between the brake pressure of the brake pipe and a target brake pressure smaller than a preset threshold.

A method for controlling a brake pressure of a railway vehicle further includes the following two working conditions:
a) during brake pressure control in a single-axle mode, the brake solenoid valve is energized and opened to inlet air, to generate a pre-control pressure of the pneumatic valve; and in this case, a pressure on the upper diaphragm of the pneumatic valve is greater than a pressure on the lower diaphragm thereof, to form a pressure difference, the pneumatic valve is closed, brake pipes involved in the two brake pressure regulation mechanisms are disconnected from each other, and the two brake pressure regulation mechanisms perform closed-loop control of the brake pressure independently, which is applicable to an anti-slip control working condition, to implement anti-slip axle control; and
a) during brake pressure control in a dual-axle mode, the brake solenoid valve is de-energized and closed, a pressure on the lower diaphragm of the pneumatic valve is greater than a pressure on the upper diaphragm thereof, to form a pressure difference, the pneumatic valve is opened, and brake pipes involved in the two brake pressure regulation mechanisms are connected to each other; and during operation, one of the two brake pressure regulation mechanisms performs pressure holding, and the other performs closed-loop control of the brake pressure, which is applicable to a non-anti-slip brake working condition, to implementing control of a brake pressure of a bogie. In the working condition b), working conditions of the two brake pressure regulation mechanisms are exchanged at regular intervals.

The present invention has the following features:
In the present invention, a brake pressure may be fed back to the microcomputer controller through the pressure sensor, and after calculation is performed by using a control algorithm in the microcomputer controller, I/O quantity signals having amplitudes of 24 V and 0 V of high-speed solenoid valves are output, to drive the deflation valve and the holding valve through the holding solenoid valve and the deflation solenoid valve, to perform inflation, deflation, and pressure holding for the brake pressure, and implement closed-loop control. The present invention has the features of high control accuracy (±6 kpa), a rapid response (regulation of a target pressure by 0-100% within 0.9 seconds), and being free from impact of performance changes or degradation of valves.

### BRIEF DESCRIPTION OF THE DRAWING

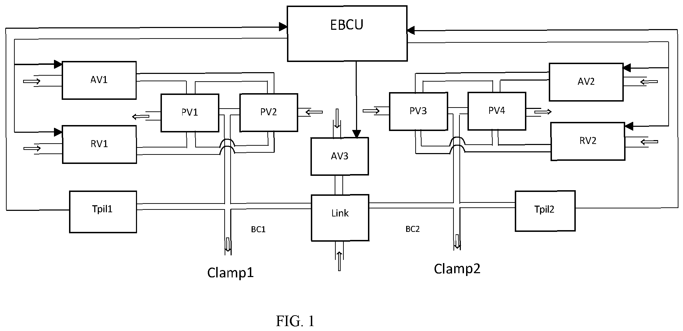

FIG. 1 is a schematic diagram of an air circuit of an apparatus for controlling a brake pressure of a railway vehicle according to the present invention.

### DETAILED DESCRIPTION OF THE EMBODIMENTS

To make objectives, technical solutions, and advantages of the embodiments of the present invention clearer, the technical solutions in the embodiments of the present invention are described below clearly and completely with reference to accompanying drawings in the embodiments of the present invention.

As shown in FIG. 1, an apparatus for controlling a brake pressure of a railway vehicle of the present invention includes two pressure sensors (a first pressure sensor Tpill and a second pressure sensor Tpil2), three brake high-speed solenoid valves (a first holding solenoid valve AV1, a second holding solenoid valve AV2, and a brake solenoid valve AV3), two brake-release high-speed solenoid valves (a first deflation solenoid valve RV1 and a second deflation solenoid valve RV2), five pneumatic valves (a first deflation valve PV1, a first holding valve PV2, a second holding valve PV3, a second deflation valve PV4, and a pneumatic valve Link), and a microcomputer controller EBCU integrated with a control policy. Current signal output ends of the two pressure sensors are connected to an analog signal input end of the microcomputer controller, first, second, third, fourth, and fifth analog signal output ends of the microcomputer controller are respectively connected to voltage signal input ends of the first holding solenoid valve AV1, the second holding solenoid valve AV2, the brake solenoid valve AV3, the first deflation solenoid valve RV1, and the second deflation solenoid valve RV2, deflation ports of the first deflation valve PV1 and the second deflation valve PV4 are in communication with the atmosphere, air inlets of the first holding valve PV2 and the second holding valve PV3 are in communication with an air supply (main air supply), pressure output ports of the first holding solenoid valve AV1 and the first deflation solenoid valve RV1 are in communication with first pressure ports and second pressure ports of the first deflation valve PV1 and the first holding valve PV2 respectively, pressure output ports of the second holding solenoid valve AV2 and the second deflation solenoid valve RV2 are in communication with first pressure ports and second pressure ports of the second deflation valve PV4 and the second holding valve PV3 respectively, one end of the pneumatic valve Link is in communication with a pressure output port of the brake solenoid valve AV3, the other end of the pneumatic valve Link is in communication with an emergency pre-control pressure, pressure input ports of the first holding solenoid valve AV1, the second holding solenoid valve AV2, the brake solenoid valve AV3, the first deflation solenoid valve RV1, and the second deflation solenoid valve RV2 are all in communication with the air supply (main air supply), the first pressure sensor Tpill and the second pressure sensor Tpil2 are respectively mounted at output ports of a first pneumatic valve group (first deflation valve PV1 and first holding valve PV2) and a second pneumatic valve group (second holding valve PV3 and second deflation valve PV4), and the output ports are respectively in communication with two ends of the pneumatic valve Link, and in addition, are respectively connected to brake clamps Clamp1 and Clamp2 of two axles. The deflation solenoid valve first RV1 and the second deflation solenoid valve RV2 are 2-position, 2-way normally-open solenoid valves, and the first holding solenoid valve AV1, the second holding solenoid valve AV2, and the brake solenoid valve AV3 are 2-position, 2-way normally-closed solenoid valves.

The present invention further includes an air circuit board, where the first pressure sensor Tpill and the second pressure sensor Tpil2, the first holding solenoid valve AV1, the second holding solenoid valve AV2 and the brake solenoid valve AV3, the first deflation solenoid valve RV1 and the second deflation solenoid valve RV2, as well as the first deflation valve PV1, the first holding valve PV2, the second holding valve PV3, the second deflation valve PV4, and the pneumatic valve Link are all mounted on the air circuit board. The air circuit board includes a volume cavity, and the air circuit board achieves connections between components of the apparatus.

The deflation valve PV1 internally includes a valve core and an upper diaphragm pressed by an output pressure of the holding solenoid valve AV1 and a lower diaphragm pressed by an output pressure of the deflation solenoid valve RV1 that are respectively disposed on two ends of the valve core, where the area of the lower diaphragm is greater than the area of the upper diaphragm, and when the pressure on the upper diaphragm is greater than the pressure on the lower diaphragm, the deflation valve PV1 is opened to deflate the brake pipe; otherwise, the deflation valve PV1 is closed; and the holding valve PV2 internally includes a valve core and an upper diaphragm pressed by the output pressure of the holding solenoid valve AV1 and a lower diaphragm pressed by the output pressure of the deflation solenoid valve RV1 that are respectively disposed on two ends of the valve core, where the area of the upper diaphragm is greater than the area of the lower diaphragm, and when the pressure on the lower diaphragm is greater than the pressure on the upper diaphragm, the holding valve PV2 is opened to inflate the brake pipe; otherwise, the holding valve PV2 is closed. The pneumatic valve Link internally includes a valve core and an upper diaphragm pressed by the output pressure of the brake solenoid valve AV3 and a lower diaphragm pressed by the emergency pre-control pressure that are respectively disposed on two ends of the valve core, where the area of the upper diaphragm is greater than the area of the lower diaphragm, and when the pressure on the lower diaphragm is greater than the pressure on the upper diaphragm, the pneumatic valve Link is opened.

A control method of the apparatus of the present invention is as follows:
1) during inflation (the brake pressure regulation mechanism on the left of FIG. 1 is used as an example for description), the first holding solenoid valve AV1 is de-energized and closed, and the first deflation solenoid valve RV1 is de-energized and opened to inlet air, to generate a corresponding pre-control pressure of the pneumatic valve; in this case, pressures on lower diaphragms of the first deflation valve PV1 and the first holding valve PV2 are greater than pressures of upper diaphragms thereof, to form a pressure difference, the first deflation valve PV1 is closed, the first holding valve PV2 is opened, and the main air supply supplies air into the brake pipe to form a brake pressure, and inputs the brake pressure to the brake clamp Clamp1;
2) during pressure holding (the brake pressure regulation mechanism on the left of FIG. 1 is used as an example for description), the first holding solenoid valve AV1 is energized and opened to inlet air, and the first deflation solenoid valve RV1 is de-energized and opened to inlet air; and in this time, the first deflation valve PV1 and the first holding valve PV2 are both closed, and a brake pressure in the brake pipe is kept unchanged;
3) during deflation (the brake pressure regulation mechanism on the left of FIG. 1 is used as an example for description), the first holding solenoid valve AV1 is energized and opened to inlet air, and the first deflation solenoid valve RV1 is energized and closed; and in this case, the pressures on the upper diaphragms of the first deflation valve PV1 and the first holding valve PV2 are greater than the pressures on the lower diaphragms thereof, to form a pressure difference, the first holding valve PV2 is cut off to inlet air, the first deflation valve PV1 is opened to exhaust air, and the brake pressure in the brake pipe is reduced;
4) during closed-loop control of the brake pressure (the brake pressure regulation mechanism on the left of FIG. 1 is used as an example for description), the first pressure sensor Tpill collects the brake pressure of the brake pipe in real time, and outputs the brake pressure to the microcomputer controller EBCU, and the microcomputer controller EBCU controls the first holding solenoid valve AV1 and the first deflation solenoid valve RV1 to drive the first deflation valve PV1 and the first holding valve PV2 to act, to make a deviation between the brake pressure of the brake pipe and a target brake pressure smaller than ±6 kpa;
5) during brake pressure control in a single-axle mode, the brake solenoid valve AV3 is energized and opened to inlet air, to generate a pre-control pressure of the pneumatic valve; and in this case, a pressure on the upper diaphragm of the pneumatic valve Link is greater than a pressure on the lower diaphragm thereof, to form a pressure difference, the pneumatic valve Link is closed, brake pipes BC1 and BC2 involved in the two brake pressure regulation mechanisms are disconnected from each other, and the two brake pressure regulation mechanisms perform closed-loop control of the brake pressure independently; this working condition is applicable to an anti-slip control working condition, to implement anti-slip axle control; and
6) during brake pressure control in a dual-axle mode, the brake solenoid valve AV3 is de-energized and closed, a pressure on the lower diaphragm of the pneumatic valve Link is greater than a pressure on the upper diaphragm thereof, to form a pressure difference, the pneumatic valve Link is opened, and brake pipes BC1 and BC2 involved in the two brake pressure regulation mechanisms are connected to each other; during operation, one of the two brake pressure regulation mechanisms performs pressure holding, and the other performs closed-loop control of the brake pressure; and this working condition is applicable to a non-anti-slip brake working condition to implement brake pressure control of a bogie. Preferably, working conditions of the two brake pressure regulation mechanisms are exchanged at regular intervals.

In the microcomputer controller EBCU integrated with a brake pressure control algorithm in the present invention, the microcomputer controller EBCU generates, according to inputs such as actual brake pressures collected by the pressure sensors, the target brake pressure, and control mode requirements, drive signals of the five high-speed solenoid valves after calculation of control algorithms such as noise filtration, pressure shock limit control, hysteresis compensation control of internal and external loop airflows, and brake pressure accuracy control. The drive signals may be in forms of I/O quantity signals having amplitudes of 24 V and 0 V The control algorithm has an anti-shock control function and has features of high control accuracy (±6 kpa), quickly responses to an increase and a decrease in a brake pressure, a small number of valve actions, high adaptability of a controlled object, and a control effect being free of impact of valve performance degradation, a low temperature, and the like.

In addition to the foregoing embodiments, the present invention may further include other implementations.

## Claims

1. An apparatus for controlling a brake pressure of a railway vehicle, the apparatus comprising a microcomputer controller (EBCU) and a brake pressure regulation mechanism, wherein the brake pressure regulation mechanism comprises:
a brake pipe connected to a brake clamp (Clamp1);
a pressure sensor (Tpill) configured to feed back a brake pressure in the brake pipe to the microcomputer controller (EBCU);
a holding solenoid valve (AV1) controlled by the microcomputer controller (EBCU);
a deflation solenoid valve (RV1) controlled by the microcomputer controller (EBCU),
a deflation valve (PV1), wherein a pressure output port of the deflation valve (PV1) is connected to the brake pipe, further **characterized in that** a deflation port of the deflation valve (PV1) is in communication with the atmosphere, wherein the deflation valve (PV1) internally includes a valve core and an upper diaphragm pressed by an output pressure of the holding solenoid valve (AV1) and a lower diaphragm pressed by an output pressure of the deflation solenoid valve (RV1) that are respectively disposed on two ends of the valve core, wherein the area of the lower diaphragm is greater than the area of the upper diaphragm, wherein when the pressure on the upper diaphragm is greater than the pressure on the lower diaphragm the deflation valve (PV1) is opened to deflate the brake pipe and wherein otherwise the deflation valve (PV1) is closed; and
a holding valve (PV2), wherein a pressure output port of the holding valve (PV2) is connected to the brake pipe, wherein the holding valve (PV2) internally includes a valve core and an upper diaphragm pressed by the output pressure of the holding solenoid valve (AV1) and a lower diaphragm pressed by the output pressure of the deflation solenoid valve (RV1) that are respectively disposed on two ends of the valve core, where the area of the upper diaphragm is greater than the area of the lower diaphragm, wherein when the pressure on the lower diaphragm is greater than the pressure on the upper diaphragm the holding valve (PV2) is opened to inflate the brake pipe and wherein otherwise the holding valve (PV2) is closed,
wherein a main air supply is connected to air inlets of the holding solenoid valve (AV1), the deflation solenoid valve (RV1), and the holding valve (PV2) respectively,
wherein an air outlet of the holding solenoid valve (AV1) is connected to respective first pressure ports of the deflation valve (PV1) and the holding valve (PV2), and
wherein an air outlet of the deflation solenoid valve (RV1) is connected to respective second pressure ports of the deflation valve (PV1) and the holding valve (PV2).

2. The apparatus for controlling a brake pressure of a railway vehicle according to claim 1, wherein the pressure sensor (Tpill) collects the brake pressure of the brake pipe in real time, and outputs the brake pressure to the microcomputer controller (EBCU), and the microcomputer controller (EBCU) controls the holding solenoid valve (AV1) and the deflation solenoid valve (RV1) to drive the deflation valve (PV1) and the holding valve (PV2) to act, to make a deviation between the brake pressure of the brake pipe and a target brake pressure smaller than a preset threshold.

3. The apparatus for controlling a brake pressure of a railway vehicle according to claim 1, comprising two brake pressure regulation mechanisms and a pneumatic valve (Link) and a brake solenoid valve (AV3) controlled by the microcomputer controller (EBCU) that are disposed between the two brake pressure regulation mechanisms, wherein brake pipes involved in the two brake pressure regulation mechanisms are in communication with each other through the pneumatic valve, an air inlet of the brake solenoid valve (AV3) is connected to the main air supply, and two control pressure ports of the pneumatic valve (Link) are respectively connected to a pressure output port of the brake solenoid valve (AV3) and an emergency pre-control pressure; and when an output pressure of the brake solenoid valve (AV3) is less than the emergency pre-control pressure, the pneumatic valve (Link) is opened to connect the brake pipes involved in the two brake pressure regulation mechanisms to each other.

4. The apparatus for controlling a brake pressure of a railway vehicle according to claim 3, wherein the pneumatic valve (Link) internally comprises a valve core and an upper diaphragm pressed by the output pressure of the brake solenoid valve (AV3) and a lower diaphragm pressed by the emergency pre-control pressure that are respectively disposed on two ends of the valve core, wherein the area of the upper diaphragm is greater than the area of the lower diaphragm, and when the pressure on the lower diaphragm is greater than the pressure on the upper diaphragm, the pneumatic valve (Link) is opened.

5. The apparatus for controlling a brake pressure of a railway vehicle according to claim 3, wherein the deflation solenoid valve (RV1) is a 2-position, 2-way normally-open solenoid valve, and the holding solenoid valve (AV1) and the brake solenoid valve (AV3) are 2-position, 2-way normally-closed solenoid valves.

6. A method for controlling a brake pressure of a railway vehicle, implemented by the apparatus for controlling a brake pressure of a railway vehicle according to claim 1, wherein:
1) during inflation, the holding solenoid valve (AV1) is de-energized and closed, and the deflation solenoid valve (RV1) is de-energized and opened to inlet air, to generate pre-control pressures of the deflation valve (PV1) and the holding valve (PV2); in this case, pressures on the lower diaphragms of the deflation valve (PV1) and the holding valve (PV2) are greater than pressures on the upper diaphragms thereof, to form a pressure difference, the deflation valve (PV1) is closed, the holding valve (PV2) is opened, and the main air supply supplies air into the brake pipe to form a brake pressure, and inputs the brake pressure to a brake clamp (Clamp1);
2) during pressure holding, the holding solenoid valve (AV1) is energized and opened to inlet air, and the deflation solenoid valve (RV1) is de-energized and opened to inlet air; and in this time, the deflation valve (PV1) and the holding valve (PV2) are both closed, and the brake pressure in the brake pipe is kept unchanged;
3) during deflation, the holding solenoid valve (AV1) is energized and opened to inlet air, and the deflation solenoid valve (RV1) is energized and closed; and in this case, the pressures on the upper diaphragms of the deflation valve (PV1) and the holding valve (PV2) are greater than the pressures on the lower diaphragms thereof, to form a pressure difference, the holding valve (PV2) is cut off to inlet air, the deflation valve (PV1) is opened to exhaust air, and the brake pressure in the brake pipe is reduced; and
4) during closed-loop control of the brake pressure, the pressure sensor (Tpill) collects the brake pressure of the brake pipe in real time, and outputs the brake pressure to the microcomputer controller (EBCU), and the microcomputer controller (EBCU) controls the holding solenoid valve (AV1) and the deflation solenoid valve (RV1) to drive the deflation valve (PV1) and the holding valve (PV2) to act, to make a deviation between the brake pressure of the brake pipe and a target brake pressure smaller than a preset threshold.

7. A method for controlling a brake pressure of a railway vehicle, implemented by the apparatus for controlling a brake pressure of a railway vehicle according to claim 4, wherein:
a) during brake pressure control in a single-axle mode, the brake solenoid valve (AV3) is energized and opened to inlet air, to generate a pre-control pressure of the pneumatic valve; and in this case, a pressure on the upper diaphragm of the pneumatic valve (Link) is greater than a pressure on the lower diaphragm thereof, to form a pressure difference, the pneumatic valve (Link) is closed, brake pipes involved in the two brake pressure regulation mechanisms are disconnected from each other, and the two brake pressure regulation mechanisms perform closed-loop control of the brake pressure independently; and
a) during brake pressure control in a dual-axle mode, the brake solenoid valve (AV3) is de-energized and closed, a pressure on the lower diaphragm of the pneumatic valve (Link) is greater than a pressure on the upper diaphragm thereof, to form a pressure difference, the pneumatic valve (Link) is opened, and brake pipes (BC1, BC2) involved in the two brake pressure regulation mechanisms are connected to each other; and during operation, one of the two brake pressure regulation mechanisms performs pressure holding, and the other performs closed-loop control of the brake pressure.

8. The method for controlling a brake pressure of a railway vehicle according to claim 7, wherein a working condition a) is applicable to an anti-slip control working condition to implement anti-slip axle control; and a working condition b) is applicable to a non-anti-slip brake working condition to implement brake pressure control of a bogie.

9. The method for controlling a brake pressure of a railway vehicle according to claim 7, wherein in the working condition b), working conditions of the two brake pressure regulation mechanisms are exchanged at regular intervals.

## Patentansprüche

1. Eine Vorrichtung zum Steuern eines Bremsdrucks eines Schienenfahrzeugs, wobei die Vorrichtung eine Mikrocomputer-Steuereinheit (EBCU) und einen Bremsdruckregulierungsmechanismus beinhaltet, wobei der Bremsdruckregulierungsmechanismus Folgendes beinhaltet:
eine Bremsleitung, die mit einer Bremsklemme (Clamp1) verbunden ist;
einen Drucksensor (TpiI1), der konfiguriert ist, um einen Bremsdruck in der Bremsleitung zu der Mikrocomputer-Steuereinheit (EBCU) zurückzuführen;
ein Elektro-Rückschlagventil (AV1), das durch die Mikrocomputer-Steuereinheit (EBCU) gesteuert wird;
ein Elektro-Entlüftungsventil (RV1), das durch die Mikrocomputer-Steuereinheit (EBCU) gesteuert wird;
ein Entlüftungsventil (PV1), wobei eine Druckausgabeöffnung des Entlüftungsventils (PV1) mit der Bremsleitung verbunden ist, ferner **dadurch gekennzeichnet, dass** eine Entlüftungsöffnung des Entlüftungsventils (PV1) in Kommunikation mit der Atmosphäre steht, wobei das Entlüftungsventil (PV1) intern einen Ventileinsatz und eine obere Membran, die durch einen Ausgabedruck des Elektro-Rückschlagventils (AV1) gedrückt wird, und eine untere Membran, die durch einen Ausgabedruck des Elektro-Entlüftungsventils (RV1) gedrückt wird, die jeweils an zwei Enden des Ventileinsatzes angeordnet sind, umfasst, wobei die Fläche der unteren Membran größer als die Fläche der oberen Membran ist, wobei, wenn der Druck auf die obere Membran größer als der Druck auf die untere Membran ist, das Entlüftungsventil (PV1) geöffnet wird, um die Bremsleitung zu entlüften, und wobei das Entlüftungsventil (PV1) andernfalls geschlossen ist; und
ein Rückschlagventil (PV2), wobei eine Druckausgabeöffnung des Rückschlagventils (PV2) mit der Bremsleitung verbunden ist, wobei das Rückschlagventil (PV2) intern einen Ventileinsatz und eine obere Membran, die durch den Ausgabedruck des Elektro-Rückschlagventils (AV1) gedrückt wird, und eine untere Membran, die durch den Ausgabedruck des Elektro-Entlüftungsventils (RV1) gedrückt wird, die jeweils an zwei Enden des Ventileinsatzes angeordnet sind, umfasst, wobei die Fläche der oberen Membran größer als die Fläche der unteren Membran ist, wobei, wenn der Druck auf die untere Membran größer als der Druck auf die obere Membran ist, das Rückschlagventil (PV2) geöffnet wird, um die Bremsleitung zu belüften, und wobei das Rückschlagventil (PV2) andernfalls geschlossen ist,
wobei eine Hauptluftzufuhrje mit Lufteinlässen des Elektro-Rückschlagventils (AV1), des Elektro-Entlüftungsventils (RV1) und des Rückschlagventils (PV2) verbunden ist,
wobei ein Luftauslass des Elektro-Rückschlagventils (AV1) mit jeweiligen ersten Drucköffnungen des Entlüftungsventils (PV1) und des Rückschlagventils (PV2) verbunden ist, und
wobei ein Luftauslass des Elektro-Entlüftungsventils (RV1) mit jeweiligen zweiten Drucköffnungen des Entlüftungsventils (PV1) und des Rückschlagventils (PV2) verbunden ist.

2. Vorrichtung zum Steuern eines Bremsdrucks eines Schienenfahrzeugs gemäß Anspruch 1, wobei der Drucksensor (TpiI1) den Bremsdruck der Bremsleitung in Echtzeit erfasst und den Bremsdruck an die Mikrocomputer-Steuereinheit (EBCU) ausgibt und die Mikrocomputer-Steuereinheit (EBCU) das Elektro-Rückschlagventil (AV1) und das Elektro-Entlüftungsventil (RV1) steuert, um das Betätigen des Entlüftungsventils (PV1) und des Rückschlagventils (PV2) zu verursachen, um eine Abweichung zwischen dem Bremsdruck der Bremsleitung und einem Zielbremsdruck kleiner als einen vorgegebenen Schwellenwert zu machen.

3. Vorrichtung zum Steuern eines Bremsdrucks eines Schienenfahrzeugs gemäß Anspruch 1, die zwei Bremsdruckregulierungsmechanismen und ein pneumatisches Ventil (Link) und ein Elektro-Bremsventil (AV3), das von der Mikrocomputer-Steuereinheit (EBCU) gesteuert wird, beinhaltet, die zwischen den zwei Bremsdruckregulierungsmechanismen angeordnet sind, wobei Bremsleitungen, die in den zwei Bremsdruckregulierungsmechanismen involviert sind, durch das pneumatische Ventil in Kommunikation miteinander stehen, ein Lufteinlass des Elektro-Bremsventils (AV3) mit der Hauptluftzufuhr verbunden ist und zwei Steuerungsdrucköffnungen des pneumatischen Ventils (Link) jeweils mit einer Druckausgabeöffnung des Elektro-Bremsventils (AV3) und einem Notfallvorsteuerungsdruck verbunden sind; und
wenn ein Ausgabedruck des Elektro-Bremsventils (AV3) geringer als der Notfallvorsteuerungsdruck ist, das pneumatische Ventil (Link) geöffnet wird, um die Bremsleitungen, die in den zwei Bremsdruckregulierungsmechanismen involviert sind, miteinander zu verbinden.

4. Vorrichtung zum Steuern eines Bremsdrucks eines Schienenfahrzeugs gemäß Anspruch 3, wobei das pneumatische Ventil (Link) intern einen Ventileinsatz und eine obere Membran, die durch den Ausgabedruck des Elektro-Bremsventils (AV3) gedrückt wird, und einen untere Membran, die durch den Notfallvorsteuerungsdruck gedrückt wird, die jeweils an zwei Enden des Ventileinsatzes angeordnet sind, beinhaltet, wobei die Fläche der oberen Membran größer als die Fläche der unteren Membran ist und, wenn der Druck auf die untere Membran größer als der Druck auf die obere Membran ist, das pneumatische Ventil (Link) geöffnet wird.

5. Vorrichtung zum Steuern eines Bremsdrucks eines Schienenfahrzeugs gemäß Anspruch 3, wobei das Elektro-Entlüftungsventil (RV1) ein Zweistellungs-, Zweiweg-, normalerweise geöffnetes Elektroventil ist und das Elektro-Rückschlagventil (AV1) und das Elektro-Bremsventil (AV3) Zweistellungs-, Zweiweg-, normalerweise geschlossene Elektroventile sind.

6. Ein Verfahren zum Steuern eines Bremsdrucks eines Schienenfahrzeugs, das von der Vorrichtung zum Steuern eines Bremsdrucks eines Schienenfahrzeugs gemäß Anspruch 1 umgesetzt wird, wobei:
1) das Elektro-Rückschlagventil (AV1) während des Belüftens aberregt und geschlossen wird und das Elektro-Entlüftungsventil (RV1) aberregt und für Einlassluft geöffnet wird, um Vorsteuerungsdrücke des Entlüftungsventils (PV1) und des Rückschlagventils (PV2) zu erzeugen; in diesem Fall sind Drücke auf die unteren Membranen des Entlüftungsventils (PV1) und des Rückschlagventils (PV2) größer als Drücke auf die oberen Membranen davon, um einen Druckunterschied zu bilden, das Entlüftungsventil (PV1) ist geschlossen, das Rückschlagventil (PV2) ist geöffnet und die Hauptluftzufuhr führt Luft in die Bremsleitung zu, um einen Bremsdruck zu bilden, und gibt den Bremsdruck in eine Bremsklemme (Clamp1) ein;
2) das Elektro-Rückschlagventil (AV1) während des Druckhaltens erregt und für Einlassluft geöffnet wird und das Elektro-Entlüftungsventil (RV1) aberregt und für Einlassluft geöffnet wird; und zu dieser Zeit sind das Entlüftungsventil (PV1) und das Rückschlagventil (PV2) beide geschlossen und der Bremsdruck in der Bremsleitung wird unverändert beibehalten;
3) das Elektro-Rückschlagventil (AV1) während der Entlüftung erregt und für Einlassluft geöffnet wird und das Elektro-Entlüftungsventil (RV1) erregt und geschlossen wird; und in diesem Fall sind die Drücke auf die oberen Membranen des Entlüftungsventils (PV1) und des Rückschlagventils (PV2) größer als die Drücke auf die unteren Membranen davon, um einen Druckunterschied zu bilden, das Rückschlagventil (PV2) ist von Einlassluft abgeschnitten, das Entlüftungsventil (PV1) ist für Abluft geöffnet und der Bremsdruck in der Bremsleitung ist reduziert; und
4) der Drucksensor (TpiI1) während der Steuerung des Bremsdrucks mit geschlossenem Kreislauf den Bremsdruck der Bremsleitung in Echtzeit erfasst und den Bremsdruck an die Mikrocomputer-Steuereinheit (EBCU) ausgibt und die Mikrocomputer-Steuereinheit (EBCU) das Elektro-Rückschlagventil (AV1) und das Elektro-Entlüftungsventil (RV1) steuert, um das Betätigen des Entlüftungsventils (PV1) und des Rückschlagventils (PV2) zu verursachen, um eine Abweichung zwischen dem Bremsdruck der Bremsleitung und einem Zielbremsdruck kleiner als einen vorgegebenen Schwellenwert zu machen.

7. Ein Verfahren zum Steuern eines Bremsdrucks eines Schienenfahrzeugs, das von der Vorrichtung zum Steuern eines Bremsdrucks eines Schienenfahrzeugs gemäß Anspruch 4 umgesetzt wird, wobei:
a) das Elektro-Bremsventil (AV3) während der Bremsdrucksteuerung in einem Einachsenmodus erregt und für Einlassluft geöffnet wird, um einen Vorsteuerungsdruck des pneumatischen Ventils zu erzeugen; und in diesem Fall ist ein Druck auf die obere Membran des pneumatischen Ventils (Link) größer als ein Druck auf die untere Membran davon, um einen Druckunterschied zu bilden, das pneumatische Ventil (Link) ist geschlossen, Bremsleitungen, die in den zwei Bremsdruckregulierungsmechanismen involviert sind, sind voneinander getrennt und die zwei Bremsdruckregulierungsmechanismen führen Steuerung des Bremsdrucks mit einem geschlossenen Kreislauf unabhängig durch; und
b) das Elektro-Bremsventil (AV3) während der Bremsdrucksteuerung in einem Zweiachsenmodus aberregt und geschlossen wird, ein Druck auf die untere Membran des pneumatischen Ventils (Link) größer als ein Druck auf die obere Membran davon ist, um einen Druckunterschied zu bilden, das pneumatische Ventil (Link) geöffnet wird und Bremsleitungen (BC1, BC2), die in den zwei Bremsdruckregulierungsmechanismen involviert sind, miteinander verbunden werden; und während des Betriebs führt einer der zwei Bremsdruckregulierungsmechanismen Druckhalten durch und der andere Steuerung des Bremsdrucks mit geschlossenem Kreislauf durch.

8. Verfahren zum Steuern eines Bremsdrucks eines Schienenfahrzeugs gemäß Anspruch 7, wobei ein Arbeitszustand a) auf einen Antischlupfregelungsarbeitszustand anwendbar ist, um Antischlupfachsregelung umzusetzen; und ein Arbeitszustand b) auf einen Nichtantischlupfbremsarbeitszustand anwendbar ist, um Bremsdrucksteuerung eines Wagens umzusetzen.

9. Verfahren zum Steuern eines Bremsdrucks eines Schienenfahrzeugs gemäß Anspruch 7, wobei in dem Arbeitszustand b) Arbeitszustände der zwei Bremsdruckregulierungsmechanismen in regelmäßigen Abständen ausgetauscht werden.

## Revendications

1. Un appareil destiné à commander une pression de frein d'un véhicule ferroviaire, l'appareil comprenant un dispositif de commande à micro-ordinateur (EBCU) et un mécanisme de régulation de pression de frein, où le mécanisme de régulation de pression de frein comprend :
une conduite de frein reliée à un étrier de frein (Clamp1) ;
un capteur de pression (Tpill) configuré pour envoyer en retour une pression de frein dans la conduite de frein au dispositif de commande à micro-ordinateur (EBCU) ;
une électrovanne de retenue (AV1) commandée par le dispositif de commande à micro-ordinateur (EBCU) ;
une électrovanne de dégonflement (RV1) commandée par le dispositif de commande à micro-ordinateur (EBCU),
une vanne de dégonflement (PV1), où un orifice de sortie de pression de la vanne de dégonflement (PV1) est relié à la conduite de frein, **caractérisé en outre en ce que** un orifice de dégonflement de la vanne de dégonflement (PV1) est en communication avec l'atmosphère, où la vanne de dégonflement (PV1) inclut à l'intérieur de celle-ci un noyau de vanne et un diaphragme supérieur sur lequel est exercée une pression de sortie de l'électrovanne de retenue (AV1) et un diaphragme inférieur sur lequel est exercée une pression de sortie de l'électrovanne de dégonflement (RV1) qui sont respectivement disposés sur deux extrémités du noyau de vanne, où l'aire du diaphragme inférieur est plus grande que l'aire du diaphragme supérieur, où lorsque la pression sur le diaphragme supérieur est plus grande que la pression sur le diaphragme inférieur, la vanne de dégonflement (PV1) est ouverte pour dégonfler la conduite de frein et où sinon la vanne de dégonflement (PV1) est fermée ; et
une vanne de retenue (PV2), où un orifice de sortie de pression de la vanne de retenue (PV2) est relié à la conduite de frein, où la vanne de retenue (PV2) inclut à l'intérieur de celle-ci un noyau de vanne et un diaphragme supérieur sur lequel est exercée la pression de sortie de l'électrovanne de retenue (AV1) et un diaphragme inférieur sur lequel est exercée la pression de sortie de l'électrovanne de dégonflement (RV1) qui sont respectivement disposés sur deux extrémités du noyau de vanne, l'aire du diaphragme supérieur étant plus grande que l'aire du diaphragme inférieur, où lorsque la pression sur le diaphragme inférieur est plus grande que la pression sur le diaphragme supérieur, la vanne de retenue (PV2) est ouverte pour gonfler la conduite de frein et où sinon la vanne de retenue (PV2) est fermée,
où une amenée d'air principale est reliée à des entrées d'air de l'électrovanne de retenue (AV1), de l'électrovanne de dégonflement (RV1), et de la vanne de retenue (PV2) respectivement,
où une sortie d'air de l'électrovanne de retenue (AV1) est reliée à des premiers orifices de pression respectifs de la vanne de dégonflement (PV1) et de la vanne de retenue (PV2), et
où une sortie d'air de l'électrovanne de dégonflement (RV1) est reliée à des deuxièmes orifices de pression respectifs de la vanne de dégonflement (PV1) et de la vanne de retenue (PV2).

2. L'appareil destiné à commander une pression de frein d'un véhicule ferroviaire selon la revendication 1, où le capteur de pression (TpiI1) recueille la pression de frein de la conduite de frein en temps réel, et fournit en sortie la pression de frein au dispositif de commande à micro-ordinateur (EBCU), et le dispositif de commande à micro-ordinateur (EBCU) commande l'électrovanne de retenue (AV1) et l'électrovanne de dégonflement (RV1) pour qu'elles pilotent la vanne de dégonflement (PV1) et la vanne de retenue (PV2) afin qu'elles agissent, pour réaliser un écart entre la pression de frein de la conduite de frein et une pression de frein cible plus petite qu'un seuil préétabli.

3. L'appareil destiné à commander une pression de frein d'un véhicule ferroviaire selon la revendication 1, comprenant deux mécanismes de régulation de pression de frein et une vanne pneumatique (Link) et une électrovanne de frein (AV3) commandée par le dispositif de commande à micro-ordinateur (EBCU) qui sont disposées entre les deux mécanismes de régulation de pression de frein, où des conduites de frein impliquées dans les deux mécanismes de régulation de pression de frein sont en communication l'une avec l'autre par l'intermédiaire de la vanne pneumatique, une entrée d'air de l'électrovanne de frein (AV3) est reliée à l'amenée d'air principale, et deux orifices de pression de commande de la vanne pneumatique (Link) sont respectivement reliés à un orifice de sortie de pression de l'électrovanne de frein (AV3) et à une pression de précommande d'urgence ; et
lorsqu'une pression de sortie de l'électrovanne de frein (AV3) est inférieure à la pression de précommande d'urgence, la vanne pneumatique (Link) est ouverte pour relier l'une à l'autre les conduites de frein impliquées dans les deux mécanismes de régulation de pression de frein.

4. L'appareil destiné à commander une pression de frein d'un véhicule ferroviaire selon la revendication 3, où la vanne pneumatique (Link) comprend à l'intérieur de celle-ci un noyau de vanne et un diaphragme supérieur sur lequel est exercée la pression de sortie de l'électrovanne de frein (AV3) et un diaphragme inférieur sur lequel est exercée la pression de précommande d'urgence qui sont respectivement disposés sur deux extrémités du noyau de vanne, où l'aire du diaphragme supérieur est plus grande que l'aire du diaphragme inférieur, et lorsque la pression sur le diaphragme inférieur est plus grande que la pression sur le diaphragme supérieur, la vanne pneumatique (Link) est ouverte.

5. L'appareil destiné à commander une pression de frein d'un véhicule ferroviaire selon la revendication 3, où l'électrovanne de dégonflement (RV1) est une électrovanne 2 voies à 2 positions, normalement ouverte, et l'électrovanne de retenue (AV1) et l'électrovanne de frein (AV3) sont des électrovannes 2 voies à 2 positions, normalement fermées.

6. Un procédé destiné à commander une pression de frein d'un véhicule ferroviaire, mis en oeuvre par l'appareil destiné à commander une pression de frein d'un véhicule ferroviaire selon la revendication 1, où :
1) durant le gonflement, l'électrovanne de retenue (AV1) est mise hors tension et fermée, et l'électrovanne de dégonflement (RV1) est mise hors tension et ouverte à l'air d'entrée, afin de générer des pressions de précommande de la vanne de dégonflement (PV1) et de la vanne de retenue (PV2) ; dans ce cas, les pressions sur les diaphragmes inférieurs de la vanne de dégonflement (PV1) et de la vanne de retenue (PV2) sont plus grandes que les pressions sur les diaphragmes supérieurs de celles-ci, afin de former une différence de pression, la vanne de dégonflement (PV1) est fermée, la vanne de retenue (PV2) est ouverte, et l'amenée d'air principale amène de l'air jusque dans la conduite de frein pour former une pression de frein, et fournit en entrée la pression de frein à un étrier de frein (Clamp1) ;
2) durant la retenue de pression, l'électrovanne de retenue (AV1) est mise sous tension et ouverte à l'air d'entrée, et l'électrovanne de dégonflement (RV1) est mise hors tension et ouverte à l'air d'entrée ; et à ce moment-là, la vanne de dégonflement (PV1) et la vanne de retenue (PV2) sont fermées toutes les deux, et la pression de frein dans la conduite de frein reste inchangée ;
3) durant le dégonflement, l'électrovanne de retenue (AV1) est mise sous tension et ouverte à l'air d'entrée, et l'électrovanne de dégonflement (RV1) est mise sous tension et fermée ; et dans ce cas, les pressions sur les diaphragmes supérieurs de la vanne de dégonflement (PV1) et de la vanne de retenue (PV2) sont plus grandes que les pressions sur les diaphragmes inférieurs de celles-ci, afin de former une différence de pression, la vanne de retenue (PV2) est coupée de l'air d'entrée, la vanne de dégonflement (PV1) est ouverte à l'air d'évacuation, et la pression de frein dans la conduite de frein est réduite ; et
4) durant la commande en boucle fermée de la pression de frein, le capteur de pression (TpiI1) recueille la pression de frein de la conduite de frein en temps réel, et fournit en sortie la pression de frein au dispositif de commande à micro-ordinateur (EBCU), et le dispositif de commande à micro-ordinateur (EBCU) commande l'électrovanne de retenue (AV1) et l'électrovanne de dégonflement (RV1) pour qu'elles pilotent la vanne de dégonflement (PV1) et la vanne de retenue (PV2) afin qu'elles agissent, pour réaliser un écart entre la pression de frein de la conduite de frein et une pression de frein cible plus petite qu'un seuil préétabli.

7. Un procédé destiné à commander une pression de frein d'un véhicule ferroviaire, mis en oeuvre par l'appareil destiné à commander une pression de frein d'un véhicule ferroviaire selon la revendication 4, où :
a) durant la commande de pression de frein dans un mode essieu simple, l'électrovanne de frein (AV3) est mise sous tension et ouverte à l'air d'entrée, afin de générer une pression de précommande de la vanne pneumatique ; et dans ce cas, une pression sur le diaphragme supérieur de la vanne pneumatique (Link) est plus grande qu'une pression sur le diaphragme inférieur de celle-ci, afin de former une différence de pression, la vanne pneumatique (Link) est fermée, des conduites de frein impliquées dans les deux mécanismes de régulation de pression de frein sont désaccouplées l'une de l'autre, et les deux mécanismes de régulation de pression de frein effectuent une commande en boucle fermée de la pression de frein indépendamment ; et
b) durant la commande de pression de frein dans un mode double essieu, l'électrovanne de frein (AV3) est mise hors tension et fermée, une pression sur le diaphragme inférieur de la vanne pneumatique (Link) est plus grande qu'une pression sur le diaphragme supérieur de celle-ci, afin de former une différence de pression, la vanne pneumatique (Link) est ouverte, et des conduites de frein (BC1, BC2) impliquées dans les deux mécanismes de régulation de pression de frein sont reliées l'une à l'autre ; et durant l'actionnement, un des deux mécanismes de régulation de pression de frein effectue une retenue de pression, et l'autre effectue une commande en boucle fermée de la pression de frein.

8. Le procédé destiné à commander une pression de frein d'un véhicule ferroviaire selon la revendication 7, où un état de fonctionnement a) peut s'appliquer à un état de fonctionnement de commande antipatinage afin de mettre en oeuvre une commande par essieu antipatinage ; et un état de fonctionnement b) peut s'appliquer à un état de fonctionnement de frein non antipatinage afin de mettre en oeuvre une commande de pression de frein d'un bogie.

9. Le procédé destiné à commander une pression de frein d'un véhicule ferroviaire selon la revendication 7, où dans l'état de fonctionnement b), les états de fonctionnement des deux mécanismes de régulation de pression de frein sont interchangés à intervalles réguliers.
